# EUROPEAN PATENT APPLICATION

(11) **EP 4 786 666 A1**
(43) Date of publication of application: **05.08.2026**
(21) Application number: 25196358.3
(22) Date of filing: 18.08.2025
(51) Int. Cl.: D04H 1/435, D04H 1/4382, D04H 1/542, D04H 1/55, D04H 1/74, B60N 3/00, G10K 11/168

(54) **PANEL**

(30) Priority: 29.01.2025 US 202519040736
(71) Applicant: Lear Corporation, Southfield, MI 48033 (US)
(72) Inventor: Kocher, Larry Francis, Southfield MI, 48033 (US); Berger, Rebecca, Kenansville NC, 28349 (US); Hatcher, Daniel, Southfield MI, 48033 (US); Peterson, Travis Russell, Southfield MI, 48033 (US)
(74) Representative: Grünecker Patent- und Rechtsanwälte PartG mbB

(57) **Abstract**

A panel, comprising a substrate comprising a first polymer with a first melting point; and a second polymer with a second melting point higher than the first melting point. The first polymer and the second polymer are vertically oriented and nonwoven. A vehicle includes the panel. A method of forming the panel comprises forming the substrate with the first polymer and the second polymer; and adhering the cover to the substrate.

## Description

### TECHNICAL FIELD

The present disclosure generally relates to panels, including panels comprising polymers that can, for example, be utilized in connection with vehicles and buildings.

### BRIEF DESCRIPTION OF THE DRAWINGS

While the claims are not limited to a specific illustration, an appreciation of various aspects may be gained through a discussion of various examples. The drawings are not necessarily to scale, and certain features may be exaggerated or hidden to better illustrate and explain an innovative aspect of an example. Further, the exemplary illustrations described herein are not exhaustive or otherwise limiting, and embodiments are not restricted to the precise form and configuration shown in the drawings or disclosed in the following detailed description. Exemplary illustrations are described in detail by referring to the drawings as follows:
**FIG. 1** is a cross-sectional view generally illustrating an embodiment of a panel according to teachings of the present disclosure.
**FIG. 2** is a schematic view generally illustrating an embodiment of a vehicle including panels according to teachings of the present disclosure.
**FIG. 3** is a flow diagram generally illustrating an embodiment of a method of forming a panel according to teachings of the present disclosure.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

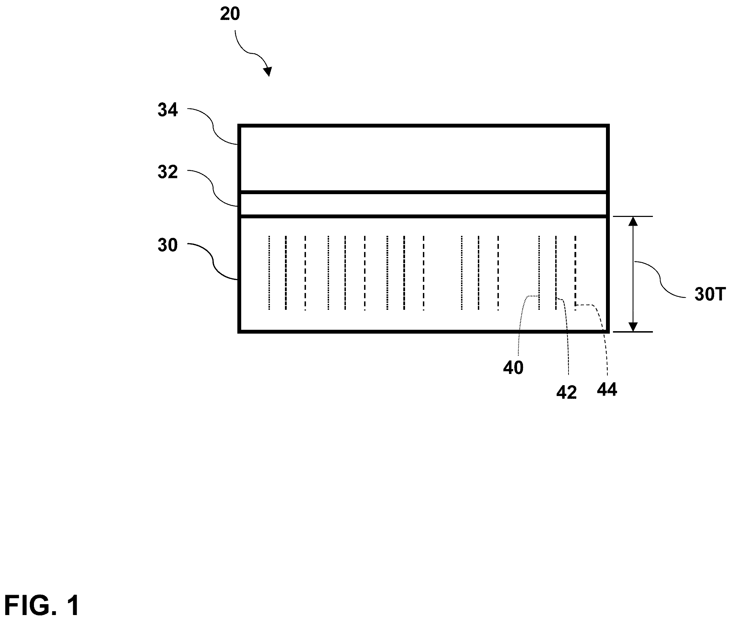

Referring to **FIG. 1****,** a panel 20 is illustrated with a substrate 30, an adhesive 32 (e.g., an adhesive layer), and a cover 34. The cover 34 is attached to the substrate 30 by the adhesive 32. The cover 34 includes, for example, fabric, vinyl, PVC, non-woven, and/or suede material, among others, and serves as the exterior surface (e.g., a class A surface) of the panel 20.

The substrate 30 includes a first polymer 40 and a second polymer 42. The first polymer 40 and the second polymer 42 include different melting points. For example, the first polymer 40 includes a first melting point, and the second polymer 42 includes a second melting point that is higher than the first melting point. The first melting point is at least 170 degrees Celsius and less than or equal to 190 degrees Celsius. The second melting point is at least 240 degrees Celsius and less than or equal to 260 degrees Celsius. Optionally, the substrate 30 includes a third polymer 44 that includes a third melting point that is lower than the first melting point. For example, the third melting point is at least 150 degrees Celsius and less than or equal to 170 degrees Celsius. Lower melt polymers, such as the first and third polymers 40, 44 can be melted without melting the higher melt polymers, such as the second polymer 42, such that the lower melt polymers bind the polymers together, which increases the integrity of the panel 20, such as to facilitate subsequent molding of the panel 20. For example, the first polymer 40 and/or the third polymer 44 act as adhesive binders. The first, second, and third melting points set forth above can allow the panel 20 and/or the substrate 30 to meet one or more environmental testing parameters and/or can provide the panel 20 and/or the substrate 30 with at least a desired level of structural rigidity.

The first polymer 40, the second polymer 42, and the third polymer 44 are vertically oriented. For example, the first polymer 40, the second polymer 42, and the third polymer 44 are vertically lapped or otherwise vertically oriented such that each comprises vertically oriented fibers (e.g., fibers that are perpendicular to a horizontal plane of the panel 20 and/or the substrate 30). Utilizing vertically oriented polymers can provide the substrate 30 with improved acoustic properties (e.g., increased sound absorption) and a lighter weight. The first polymer 40, the second polymer 42, and the third polymer 44 are nonwoven. Examples of the first polymer 40, the second polymer 42, and the third polymer 44 include polyester, polypropylene, and/or nylon, among others. Optionally, the first polymer 40 comprises a first ester-based polymer or thermoplastic, the second polymer 42 includes a second ester-based polymer or thermoplastic, and/or the third polymer 44 comprises a second ester-based polymer or thermoplastic. Utilizing ester-based polymers can allow for the use of recycled materials and allow for the substrate 30 to be recycled (e.g., polymers 40-44 are optionally recycled polymers). Optionally, at least the substrate 30 of the panel 20 is recyclable. The first polymer 40, the second polymer 42, and the third polymer 44 are provided as a homogeneous construction of entangled filaments or fibers.

The substrate 30 comprises a combination of the first polymer 40, the second polymer 42, the third polymer 44, one or more additional polymers, or combinations thereof. Optionally, the composition of the substrate 30 includes, by weight, 40%-70% of the second polymer 42, 10%-40% of the first polymer 40, and 10%-40% of the third polymer 44, with all ranges inclusive of endpoints. Such ratios of the polymers 40-44 can provide improved acoustic performance (e.g., sound absorption) while also providing the desired level of bending stiffness (e.g., flexural modulus) and strength.

The substrate 30 comprises density of at least 12 kg/m³ and less than 1000 kg/m³, which allows the substrate 30 to be lighter than other substrates and the panel 20 to be lighter than other panels. The substrate 30 is compressible such that the substrate 30 can include a range of thicknesses, which provide a corresponding range of densities. For example, the substrate 30 can include a thickness 30T that is at least 2 mm and less than or equal to 25 mm. With the thickness 30T of 2 mm, the density of the substrate 30 is at least 150 kg/m³ and less than 1000 kg/m³. With the thickness 30T of 25 mm the density of the substrate 30 is at least 12 kg/m³ less than or equal to 80 kg/m³. The substrate 30 optionally includes a weight of at least 300 grams/m² and less than or equal to 2000 grams/m².

While described with the first polymer 40, the second polymer 42, and/or the third polymer 44, the substrate 30 optionally includes one or more additional polymers. Alternatively, the substrate 30 optionally includes only the first polymer 40 and the second polymer 42, or only the first polymer 40, the second polymer 42, and/or the third polymer 44.

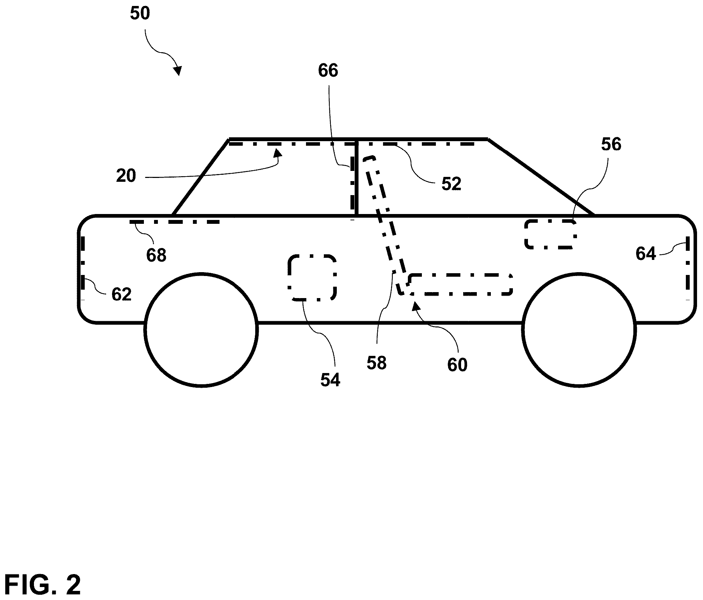

The panel 20 and/or the substrate 30 thereof can be utilized in a variety of applications, such as for vehicles (e.g., vehicle 50 in FIG. 2), ceiling tiles, acoustic paneling (e.g., sound absorbing paneling), or cubicle walls, among others

Referring to FIG. 2, the vehicle 50 comprises the panel 20. In such an example, the panel 20 is utilized as at least a portion of a headliner 52, a door panel 54, a dashboard 56, a seatback 58 of a vehicle seat 60, a trunk liner 62, a frunk liner 64, a pillar 66, and/or a luggage cover 68.

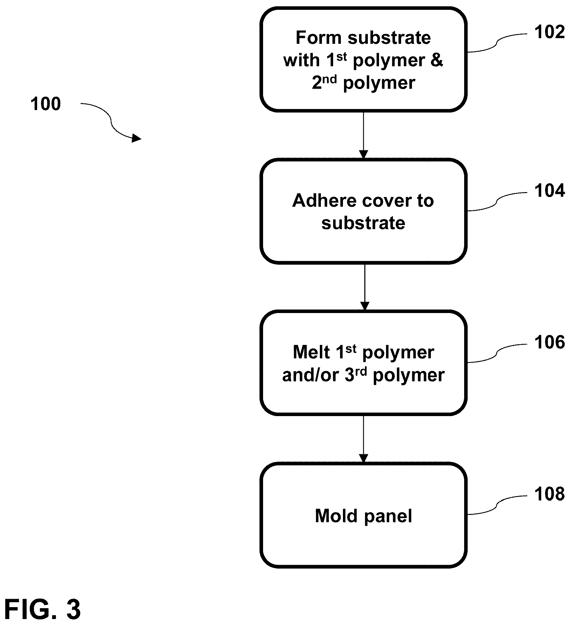

Referring to FIG. 3, a method 100 of forming the panel 20 is illustrated. The method 100 includes forming the substrate 30 (block 102), such as with the first polymer and the second polymer. Forming the substrate 30 in block 102 optionally includes forming the substrate with the first polymer, the second polymer, and the third polymer. Forming the substrate 30 in block 102, additionally or alternatively includes vertically lapping the first polymer, the second polymer, and the third polymer. The method 100 includes adhering the cover 34 to the substrate 30 (block 104), such as via the adhesive 32. Adhering the cover 34 to the substrate 30 can be accomplished without utilizing one or more polyurethane foam layers, which can reduce the manufacturing time, reduce transportation time, reduce carbon emissions (e.g., from transportation and the material itself), reduce overall panel weight, allow for recycling at end of life, and/or lower volatile organic compounds (VOCs) associated with the panel 20 and/or in the vehicle 50. For example, the panel 20 can be devoid of a polyurethane foam layer. The method 100 includes melting, at least to some degree, the first polymer and/or the third polymer (block 106). Melting the first polymer 40 and/or the third polymer 44 in block 106 binds the first polymer 40, the second polymer 42, and the third polymer together 44. Melting the first polymer 40 and/or the third polymer 44 in block 106 includes heating the substrate 30 above the third melting point or above the first melting point without heating the substrate 30 to the second melting point (e.g., without melting the second polymer 42). Optionally, the adhering in block 104 and the melting in block 106 are combined as part of laminating the cover 34 with the substrate 30. The method 100 optionally includes molding the panel 20 (block 108), such as into the headliner 52, the door panel 54, the dashboard 56, the seatback 58, the trunk liner 62, the frunk liner 64, the pillar 66, and/or the luggage cover 68. In some examples, the panel 20 is initially formed large enough to be molded and cut into multiple of the same component (e.g., multiple of the headliner 52) or multiple different components (e.g. the headliner 52 and the door panel 54). Additionally or alternatively, the same vehicle 50 optionally includes multiple panels 20. Molding the panel 20 in block 108 includes heating the substrate 30 to or above the second melting point such that all of the first polymer, the second polymer, and the third polymer melt, at least to some degree. For example, the molding in block 108 is conducted at a higher temperature than the melting in block 106.

The instant disclosure includes the following non-limiting embodiments:

A panel, comprising: a substrate comprising: a first polymer with a first melting point; and a second polymer with a second melting point higher than the first melting point; wherein the first polymer and the second polymer are vertically oriented and nonwoven.

The panel of any preceding embodiment, wherein the first polymer and the second polymer comprise ester-based polymers.

The panel of any preceding embodiment, wherein the first polymer and the second polymer comprise ester-based thermoplastics.

The panel of any preceding embodiment, wherein the first melting point is at least 170 degrees Celsius and less than or equal to 190 degrees Celsius.

The panel of any preceding embodiment, wherein the second melting point is at least 240 degrees Celsius and less than or equal to 260 degrees Celsius.

The panel of any preceding embodiment, wherein the substrate further comprises a third polymer with a third melting point lower than the first melting point.

The panel of any preceding embodiment, wherein the third melting point is at least 150 degrees Celsius and less than or equal to 170 degrees Celsius.

The panel of any preceding embodiment, wherein the second polymer comprises at least 40% and less than or equal to 70% of a weight of the substrate.

The panel of any preceding embodiment, wherein the first polymer comprises at least 10% and less than or equal to 40% of the weight of the substrate.

The panel of any preceding embodiment, wherein the third polymer comprises at least 10% and less than or equal to 40% of the weight of the substrate.

The panel of any preceding embodiment, wherein the substrate includes a thickness of at least 2 mm and less than or equal to 25 mm.

The panel of any preceding embodiment, wherein the substrate includes a density of at least 12 kg/m³ and less than or equal to 1000 kg/m³.

The panel of any preceding embodiment, wherein the thickness is 25 mm; and the density is less than or equal to 80 kg/m³.

The panel of any preceding embodiment, wherein the thickness is 2 mm; and the density is at least 150 kg/m³.

The panel of any preceding embodiment, wherein the substrate includes a weight of at least 300 grams/m² and less than or equal to 2000 grams/m².

The panel of any preceding embodiment, further comprising: an adhesive layer on the substrate; and a cover attached to the substrate by the adhesive layer.

The panel of any preceding embodiment, wherein the panel is devoid of a polyurethane foam layer.

A vehicle comprising the panel of any preceding embodiment.

A ceiling tile comprising the panel of any preceding embodiment.

A ceiling tile comprising the substrate of any preceding embodiment.

A cubicle wall comprising the panel of any preceding embodiment.

An acoustic panel comprising the panel of any preceding embodiment.

A vehicle seat comprising the panel of any preceding embodiment.

A method of forming the panel of any preceding embodiment, the method comprising: forming the substrate with the first polymer and the second polymer; and adhering the cover to the substrate.

The method of any preceding embodiment, wherein forming the substrate includes forming the substrate with the first polymer, the second polymer, and a third polymer.

The method of any preceding embodiment, wherein the third polymer has a lower melting point than the first polymer.

The method of any preceding embodiment, wherein the cover is adhered to the substrate without utilizing a polyurethane foam layer.

The method of any preceding embodiment, further comprising melting the first polymer, the third polymer or both without melting the second polymer.

The method of any preceding embodiment, further comprising molding the panel.

The method of any preceding embodiment, wherein molding the panel includes molding the panel into at least a portion of a headliner, a door panel, or a dashboard.

The method of any preceding embodiment, wherein molding the panel include heating the substrate above melting points of first polymer, the second polymer, and the third polymer.

Various examples/embodiments are described herein for various apparatuses, systems, and/or methods. Numerous specific details are set forth to provide a thorough understanding of the overall structure, function, manufacture, and use of the examples/embodiments as described in the specification and illustrated in the accompanying drawings. It will be understood by those skilled in the art, however, that the examples/embodiments may be practiced without such specific details. In other instances, well-known operations, components, and elements have not been described in detail so as not to obscure the examples/embodiments described in the specification. Those of ordinary skill in the art will understand that the examples/embodiments described and illustrated herein are non-limiting examples, and thus it can be appreciated that the specific structural and functional details disclosed herein may be representative and do not necessarily limit the scope of the embodiments.

Reference throughout the specification to "examples, "in examples," "with examples," "in the illustrated example," "various embodiments," "with embodiments," "in embodiments," "an embodiment," "with some configurations," "in some configurations," or the like, means that a particular feature, structure, or characteristic described in connection with the example/embodiment is included in at least one embodiment. Thus, appearances of the phrases "examples, "in examples," "with examples," "in the illustrated example," "in various embodiments," "with embodiments," "in embodiments," "an embodiment," "with some configurations," "in some configurations," or the like, in places throughout the specification are not necessarily all referring to the same embodiment. Furthermore, the particular features, structures, and/or characteristics may be combined in any suitable manner in one or more examples/embodiments. Thus, the particular features, structures, or characteristics illustrated or described in connection with one embodiment/example may be combined, in whole or in part, with the features, structures, functions, and/or characteristics of one or more other embodiments/examples without limitation given that such combination is not illogical or non-functional. Moreover, many modifications may be made to adapt a particular situation or material to the teachings of the present disclosure without departing from the scope thereof. The word "exemplary" is used herein to mean "serving as a non-limiting example."

It should be understood that references to a single element are not necessarily so limited and may include one or more of such element, unless the context clearly indicates otherwise. Any directional references (e.g., plus, minus, upper, lower, upward, downward, left, right, leftward, rightward, top, bottom, above, below, vertical, horizontal, clockwise, and counterclockwise) are only used for identification purposes to aid the reader's understanding of the present disclosure, and do not create limitations, particularly as to the position, orientation, or use of examples/embodiments.

"One or more" includes a function being performed by one element, a function being performed by more than one element, e.g., in a distributed fashion, several functions being performed by one element, several functions being performed by several elements, or any combination of the above. The term "at least one of' in the context of, e.g., "at least one of A, B, and C" or "at least one of A, B, or C" includes only A, only B, only C, or any combination or subset of A, B, and C, including any combination or subset of one or a plurality of A, one or a plurality of B, and one or a plurality of C. A "set" of elements can include any number of one or more elements.

Although the terms first, second, etc. are, in some instances, used herein to describe various elements, these elements should not be limited by these terms. These terms are only used to distinguish one element from another. For example, a first element could be termed a second element, and, similarly, a second element could be termed a first element, without departing from the scope of the various described embodiments. The first element and the second element are both elements, but they are not the same element.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. The term "and/or" as used herein refers to and encompasses any and all possible combinations of one or more of the associated listed items. Uses of "and" and "or" are to be construed broadly (e.g., to be treated as "and/or"). For example and without limitation, uses of "and" do not necessarily require all elements or features listed, and uses of "or" are inclusive unless such a construction would be illogical. The terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

Joinder references (e.g., attached, coupled, connected, and the like) are to be construed broadly and may include intermediate members between a connection of elements, relative movement between elements, direct connections, indirect connections, fixed connections, movable connections, operative connections, indirect contact, and/or direct contact. As such, joinder references do not necessarily imply that two elements are directly connected/coupled and in fixed relation to each other. Connections of electrical components, if any, may include mechanical connections, electrical connections, wired connections, and/or wireless connections, among others. Uses of "e.g." and "such as" in the specification are to be construed broadly and are used to provide non-limiting examples of embodiments of the disclosure, and the disclosure is not limited to such examples.

While processes, systems, and methods may be described herein in connection with one or more steps in a particular sequence, such methods may be practiced with the steps in a different order, with certain steps performed simultaneously, with additional steps, and/or with certain described steps omitted.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

References to a vehicle (e.g., vehicle 50) can include one or more of a variety of vehicles, including, without limitation, a passenger car (e.g., a sedan, a pickup truck, a sport utility vehicle, a crossover, etc.), a truck, a bus, a plane, a recreational vehicle (RV), or a boat, among others.

All matter contained in the above description or shown in the accompanying drawings shall be interpreted as illustrative only and not limiting. Changes in detail or structure may be made without departing from the present disclosure.

## Claims

1. A panel, comprising:
a substrate comprising:
a first polymer with a first melting point; and
a second polymer with a second melting point higher than the first melting point;
wherein the first polymer and the second polymer are vertically oriented and nonwoven.

2. The panel of claim 1, wherein the first polymer and the second polymer comprise ester-based polymers,
and/or wherein the first polymer and the second polymer comprise ester-based thermoplastics.

3. The panel of any of the preceding claims, wherein the first melting point is at least 170 degrees Celsius and less than or equal to 190 degrees Celsius.

4. The panel of any of the preceding claims, wherein the second melting point is at least 240 degrees Celsius and less than or equal to 260 degrees Celsius.

5. The panel of any of the preceding claims, wherein the substrate further comprises a third polymer with a third melting point lower than the first melting point,
wherein preferably the third melting point is at least 150 degrees Celsius and less than or equal to 170 degrees Celsius.

6. The panel of any of the preceding claims, wherein the second polymer comprises at least 40% and less than or equal to 70% of a weight of the substrate.

7. The panel of any of the preceding claims, wherein the first polymer comprises at least 10% and less than or equal to 40% of the weight of the substrate,
wherein preferably the third polymer comprises at least 10% and less than or equal to 40% of the weight of the substrate.

8. The panel of any of the preceding claims, wherein the substrate includes a thickness of at least 2 mm and less than or equal to 25 mm.

9. The panel of claim 8, wherein the substrate includes a density of at least 12 kg/m³ and less than or equal to 1000 kg/m³.

10. The panel of claim 9, wherein the thickness is 25 mm; and the density is less than or equal to 80 kg/m³,
or wherein the thickness is 2 mm; and the density is at least 150 kg/m³.

11. The panel of any of claims 8 to 10, wherein the substrate includes a weight of at least 300 grams/m² and less than or equal to 2000 grams/m².

12. The panel of any of the preceding claims, further comprising:
an adhesive layer on the substrate; and
a cover attached to the substrate by the adhesive layer.

13. A vehicle comprising the panel of claim 12.

14. A method of forming the panel of claim 12, the method comprising:
forming the substrate with the first polymer and the second polymer; and
adhering the cover to the substrate.

15. The method of claim 14, wherein forming the substrate includes forming the substrate with the first polymer, the second polymer, and a third polymer,
wherein preferably the third polymer has a lower melting point than the first polymer, and the cover is adhered to the substrate without utilizing a polyurethane foam layer.
